# EUROPÄISCHE PATENTANMELDUNG

(11) **EP 1 530 105 A2**
(43) Veröffentlichungstag der Anmeldung: **11.05.2005**
(21) Anmeldenummer: 04025645.5
(22) Anmeldetag: 28.10.2004
(51) Int. Cl.: G05B 19/042

(54) **Vorrichtung zum funktionsgerechten Betrieb von elektrischen Komponenten**

(30) Priorität: 07.11.2003 DE 10352036
(71) Anmelder: Bayerische Motoren Werke Aktiengesellschaft, 80809 München (DE)
(72) Erfinder: Borke, Danny, 80935 München (DE)

(57) **Zusammenfassung**

Bei einer Vorrichtung zum funktionsgerechten Betrieb von elektrischen Komponenten in einem Kraftfahrzeug mittels eines zugeordneten Steuergerätes (1), an dessen Kontaktelementen (A-H) die zwischen dem Steuergerät und der jeweiligen Komponente vorgesehenen Verbindungsleitungen angeschlossen sind und in dem den Komponenten zugeordnete elektrische Betriebselemente (F1-F3) vorgesehen und mit den Kontaktelementen verbunden sind, ist zwischen den Betriebselementen und den Kontaktelementen ein programmierbarer Pfaderzeuger vorgesehen, mit dem die Zuordnung zwischen den zu den Betriebselementen führenden Verbindungen und den Kontaktelementen einstellbar ist.

## Beschreibung

Die Erfindung bezieht sich auf eine Vorrichtung mit den Merkmalen des Oberbegriffs von Patentanspruch 1.

Bei heutigen Fahrzeugen werden die Auswahl und die Zuordnung der in der Regel als Stecker ausgebildeten Kontaktelemente zu den jeweiligen Komponenten in einer frühen Phase der Entwicklung und damit lange vor der eigentlichen Serienverwendung festgelegt. Dabei muss bereits vorab eingeschätzt werden, welche Reserven in welchem Stecker benötigt werden. Die Verwendung von so definierten Steuergeräten in anderen Umgebungen, beispielsweise einem Fahrzeug anderen Typs, als die definierte erfordert in der Regel Kabelbaumanpassungen.

Es kann auch vorkommen, dass in der anderen Umgebung zwar dieselbe Funktion anzusteuern ist. Da die dafür vorgesehenen Aktuatoren aber über andere Anschlusskontakte verfügen, reicht auch eine Kabelbaumänderung nicht mehr aus, um das Steuergerät wieder einsetzen zu können. Ein an sich bekannter und üblicher Steckeradapter ist wegen fehlender Betriebssicherheit nicht geeignet.

Der Erfindung liegt die Aufgabe zu Grunde, eine Vorrichtung der eingangs genannten Art zu schaffen, mit der ein Steuergerät variabel einsetzbar ist.

Die Erfindung löst diese Aufgabe mit den im Patentanspruch 1 angegebenen Mitteln.

Durch den programmierbaren Pfaderzeuger in Verbindung mit den jeweiligen Basisgrundfunktionen wird die Zuordnung zwischen den zu den Betriebselementen führenden Verbindungen und den Kontaktelementen und die Betriebsweise der Betriebselemente entsprechend den jeweiligen Bedingungen einstellbar. Damit wird ein funktionsgerechter Betrieb der elektrischen Komponenten mittels des Steuergerätes erreicht.

In den Patentansprüchen 2 und 3 sind alternative Ausführungsformen der Erfindung angegeben.

Werden die Zuordnungen für die jeweiligen Einsatzbedingungen bleibend eingestellt, lässt sich ein hohes Maß an Betriebssicherheit erzielen. Allerdings lassen sich beispielsweise nachträgliche Änderungen der Zuordnungen schwierig realisieren. Ein derartiger Fall tritt beispielsweise dann auf, wenn nur ein Ersatzteil zur Verfügung steht, das eine geänderte Kontaktzuordnung besitzt.

Sind die Zuordnungen fallweise einstellbar, ergibt sich eine jederzeit leicht und schnell anpassbare Vorrichtung.

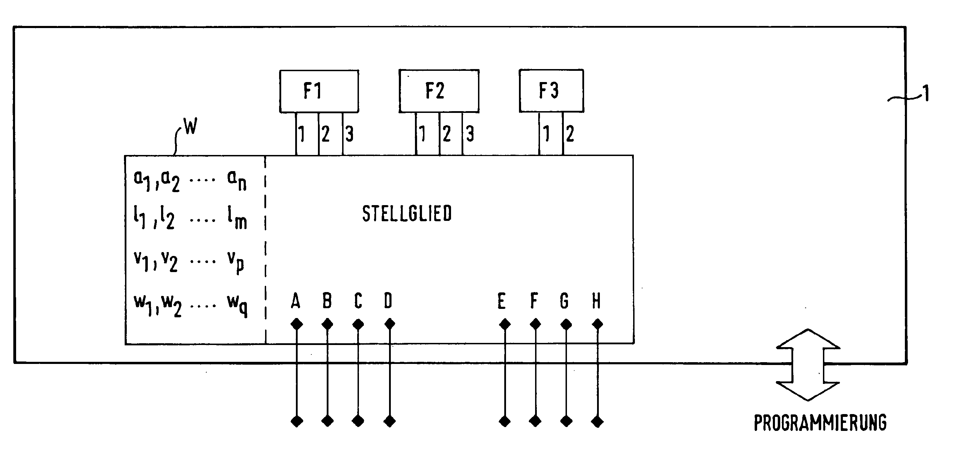

An Hand der Zeichnung ist die Erfindung weiter erläutert.

Ein nicht im einzelnen gezeigtes Steuergerät 1 enthält nicht detailliert dargestellte Betriebselemente in Form von hardware- oder softwaretechnischen Routerelementen wie Schaltern, Multiplexern, Umwandlern etc. bzw. SW Routingtabellen zur Steuerung von z.B. 3 unabhängigen Funktionen eines Kraftfahrzeugs. Die Betriebselemente sind mit F1, F2 und F3 bezeichnet. Bei diesen Funktionen kann es sich um Teile einer elektrischen Sitzverstellung mit Aktuatoren für die Sitzlängen-, Sitzhöhen und Lehneneinstellung handeln.

Ferner sind innerhalb des Steuergeräts mehrere Systembasisfunktionen vorhanden. Es handelt sich dabei beispielsweise um verschiedene Grund-Algorithmen für den Betrieb elektrischer Komponenten, wie Heizungen, elektrische Antriebe, Hydraulikelemente etc. (z.B. Sitzheizung, Sitzverstellung, Fensterheber und Lenkradverstellung, Spiegelverstellung etc).

Für einen Heizbetrieb ist ein Algorithmus für einen Dauerbetrieb bis zum Erreichen einer vorgebbaren Solltemperatur, ein Algorithmus für einen getakteten Betrieb bis zum Erreichen einer vorgebbaren Solltemperatur, eine bleibende Abschaltung nach einer vorgebbaren Betriebsdauer und ein getakteter Betrieb bei Erreichen einer vorgebbaren Solltemperatur im Steuergerät vorhanden.

Entsprechend existieren für den Betrieb elektrischer Antriebskomponenten Algorithmen a1, a2,...an für einen Betrieb mit wechselnder Drehrichtung, einen Betrieb bis hin zu einer Endstellung, einer sofortigen Unterbrechung bei Erreichen einer Endstellung und/oder eines Zwischenstopps und/oder eines Sicherheitsstopps.

Für den Anschluss von elektrischen Stromverbrauchern wie beispielsweise o.g. und/oder Glühlampen und LED etc. sind Leistungsschalter I1, I2,...Im mit verschiedenen Leistungsmerkmalen, für den Anschluss von Sensoren Verstärker-/Korrekturschaltungen v1, v2,...vp mit verschiedenen Leistungsmerkmalen im Steuergerät vorgesehen. Sollen die elektrischen Verbraucher/Sensoren getaktet/geschalten betrieben werden, stehen dafür eine Reihe von Pulsweitenmodulatoren wI1, w2,...wq und Aktivierungsschaltungen zur Verfügung.

Aus diesem "Werkzeugkasten" W mit den genannten Basisfunktionen Algorithmen, Leistungsschalter, Verstärkerschalter und Pulsweitenmodulatoren und Überwachungs-/Diagnosefunktionen lassen sich innerhalb des Steuergeräts den angeschlossenen Komponenten die jeweiligen Basisfunktionen zuordnen.

Die zu den nicht gezeigten Aktoren führenden Verbindungsleitungen sind an den Kontakten A-H des Steuergeräts angeschlossen. Dabei sind die Kontakte A, B und E der Funktion F1, die Kontakte C, F und G der Funktion F2 und die Kontakte D und H der Funktion F3 zugeordnet.

Es handle sich bei F1 beispielsweise um eine Sitzlängsverstellung, bei F2 um eine Sitzheizung und bei F3 um eine Glühlampe für eine Innenbeleuchtung. Die mit 1, 2 (und 3) bezeichneten Leitungen stellen die Signalleitungen dar, über die der Wunsch des Fahrzeugbenutzers aufgegeben wird, beispielsweise die Sitzheizung in Stufe 2 zu betreiben bzw. ein indirekt aufgegebener Schaltbefehl ausgelöst wird, beispielsweise die Innenbeleuchtung ein- bzw. auszuschalten. Letzteres erfolgt bei Öffnen/Schließen einer Fahrzeugtür.

Mittels eines programmierbaren Pfaderzeugers werden die Kontakte A-H mit den zugehörigen Betriebselementen und der/den jeweiligen Basisfunktion(en) verbunden. Für die Sitzlängsverstellung bedeutet dies beispielsweise als Betriebselemente ein Schalter und ein Anschluss an einer Stromquelle, und als Basisfunktionen ein für eine elektrischen Antriebsmotor mit Bewegungsanschlag typischer Algorithmus (aus den vorhandenen a1, a2,...an ), ein geeigneter Pulsweitenmodulator (aus den vorhandenen wI1, w2,...wq) und ein geeigneter Leistungsschalter (aus den vorhandenen I1, I2,...Im).

Bei einem anderen Verwendungsfall sind die Kontakte A-H anders belegt. Beispielsweise sind C, F und G der Funktion F1 zugeordnet. Der Pfaderzeuger wird dann entsprechend anders programmiert und stellt auch für diesen Fall die richtige Zuordnung zwischen den erforderlichen Betriebselement, den Basisfunktionen und den Anschlusskontakten zur Realisierung der Funktion her. Die Betriebselemente und Basisfunktionen bleiben, sofern es sich bei F1 wieder um eine Sitzlängsverstellung beim selben Fahrzeugmodell handelt, gegenüber dem vorhin beschriebenen Beispiel unverändert. Handelt es sich hingegen um eine andere Funktion, beispielsweise um eine Sitzlängsverstellung in einem anderen Fahrzeugmodell, wird an Stelle des oben verwendeten Algorithmus, z.B. des Algorithmus a2, der Algorithmus a3 verwendet, um beispielsweise zusätzlich einen Einklemmschutz zu realisieren.

### Zusammengefasst ist das Grundprinzip der Erfindung wiedergegeben:

Auf der Ebene der physikalischen Parameter spezifischer Anschlüsse wie Leistungsausgänge, Sensoreingänge, Betriebsweise (z.B. elektrisch oder optisch), Anschließwiderstand, Belastbarkeit usw. lassen sich Gemeinsamkeiten finden um so Standardschnittstellen auf atomarer (ein PIN) Ebene zu schaffen. Die so definierten "Einpinschnittstellen" lassen sich dann beliebig zu Komplexeren "Mehrpinschnittstellen" kombinieren und durch Zuordnung zu einer oder mehreren der vorhandenen Basisfunktionen per Software konfigurieren, d.h. in der elektrischen Funktionalität einstellen.

Somit können Steuergeräte künftig als Baukasten skalierbar mit einer definierten Menge von "Einpinschnittstellen" entwickelt werden und variabel über SW-Konfiguration eine Vielzahl von zunächst nicht oder nicht mit ausreichender Genauigkeit bekannter Funktionen ansteuern. So gewinnt man die Unabhängigkeit zwischen Funktionsentwicklung und Steuergerätehardwareentwicklung.

Dadurch ergeben sich eine Verringerung der Entwicklungskosten und eine Erhöhung der Qualität, da Absicherungs- und Testphasen im Entwicklungsprozess früher erfolgen können.

## Patentansprüche

1. Vorrichtung zum funktionsgerechten Betrieb von elektrischen Komponenten in einem Kraftfahrzeug mittels eines zugeordneten Steuergerätes, an dessen Kontaktelementen die zwischen dem Steuergerät und der jeweiligen Komponente vorgesehenen Verbindungsleitungen angeschlossen sind und in dem den Komponenten zugeordnete elektrische Betriebselemente vorgesehen und mit den Kontaktelementen verbunden sind, **dadurch gekennzeichnet, dass** zwischen den Betriebselementen und den Kontaktelementen ein programmierbarer Pfaderzeuger vorgesehen ist, mit dem die Zuordnung zwischen den zu den Betriebselementen führenden Verbindungen und den Kontaktelementen einstellbar ist, dass innerhalb des Steuergeräts mehrere Systembasisfunktionen vorhanden sind, und dass innerhalb des Steuergeräts den Betriebselementen der angeschlossenen Komponenten die jeweiligen Basisfunktionen zuordenbar sind.

2. Vorrichtung nach Anspruch 1, **dadurch gekennzeichnet, dass** die Zuordnungen bleibend eingestellt ist.

3. Vorrichtung nach Anspruch 1 oder 2, **dadurch gekennzeichnet, dass** die Zuordnungen fallweise einstellbar ist.
